# EUROPEAN PATENT SPECIFICATION

(11) **EP 3 492 370 B1**
(45) Date of publication and mention of the grant of the patent: **15.07.2020**
(21) Application number: 18202248.3
(22) Date of filing: 24.10.2018
(51) Int. Cl.: B64C 3/56, B64F 5/60

(54) **METHOD FOR TESTING OPERATION OF AN ARRESTING UNIT FOR LOCKING A FOLDABLE WING TIP PORTION IN AN EXTENDED POSITION**
VERFAHREN ZUM TESTEN DES BETRIEBS EINER ARRETIEREINHEIT ZUM VERRIEGELN EINES FALTBAREN FLÜGELSPITZENABSCHNITTS IN EINER AUSGEFAHRENEN POSITION
PROCÉDÉ PERMETTANT DE TESTER LE FONCTIONNEMENT D'UNE UNITÉ D'ARRÊT POUR LE VERROUILLAGE D'UNE PARTIE D'EXTRÉMITÉ D'AILE PLIABLE DANS UNE POSITION ÉTENDUE

(30) Priority: 17.11.2017 DE 102017127193
(43) Date of publication of application: 05.06.2019
(73) Proprietor: Airbus Operations GmbH, 21129 Hamburg (DE)
(72) Inventor: Dege, Saskia, 21129 Hamburg (DE); Jegminat, Svenja, 21129 Hamburg (DE)
(74) Representative: Bird & Bird LLP

(56) References cited:
- EP-A2- 2 727 829
- WO-A1-2009/088961
- DE-A1-102015 014 635
- GB-A- 2 530 578

## Description

The present invention relates to a method for testing operation of an arresting unit, in particular a method for testing health or structural integrity of the arresting unit. The arresting unit is configured for locking a foldable wing tip portion of a wing for an aircraft in an extended position, i.e. in flight configuration. A further aspect of the invention relates to an aircraft configured for carrying out such a method.

Foldable wings comprise a fixed wing and a foldable wing tip portion mounted to the fixed wing in a foldable manner, i.e. pivotable either upwards or sidewards, preferably rearwards. In particular, to be folded upwards the foldable wing tip portion is preferably pivotable about an axis extending in a horizontal plane and/or in parallel to a wing chord direction and/or in parallel to the wing surface and/or in a flight direction. To be folded sidewards, the foldable wing tip portion is preferably pivotable about a vertical axis and/or about an axis in parallel to a wing thickness direction and/or about an axis normal to a plane spanned by the wing chord direction and a wing span direction.

Foldable wings are developed in order to reduce the space requirements of an aircraft during maneuver and parking on ground. During flight the foldable wing tip portions are locked in an extended position. As soon as the aircraft has landed the foldable wing tip portions are folded away, i.e. folded upwards or rearwards, thereby reducing the overall span of the aircraft.

Similar foldable wing systems are known from EP 2 727 829 A2, DE 10 2015 014635 A1, WO 2009/088961 A1 or GB 2 530 578 A, wherein EP 2 727 829 A2 discloses the features of the preamble of the independent claims.

For locking the foldable wing tip portions in the extended position during flight an arresting unit is provided. Since the arresting unit usually carries the full air loads of the foldable wing tip portion during flight, its correct operation, in particular its health and structural integrity, is essential. This means, high demands are made on maintenance of the arresting unit.

Therefore, the object of the present invention is to ease maintenance of the aircraft.

This object is achieved by a method for testing operation of the arresting unit, comprising the following steps:
First, a wing for an aircraft is provided. The wing comprises a fixed wing, a foldable wing tip portion, an actuation unit and an arresting unit. The fixed wing extends between a root end and a tip end. The foldable wing tip portion is mounted to the tip end of the fixed wing pivotally about an axis of rotation between an extended position, i.e. a flight position, and a folded position, i.e. a ground position. In the extended position the foldable wing tip portion extends in the wing span direction as an extension of the fixed wing. In the folded position the foldable wing tip portion is folded away and extends under an angle with respect to the wing span direction. The axis of rotation preferably extends in a wing chord direction or in a wing thickness direction. The actuation unit preferably includes a motor, e.g. an electric motor combined with a gear box, and is configured for actuating movement of the foldable wing tip portion between the extended position and the folded position. The arresting unit is configured for locking the foldable wing tip portion in the extended position. I.e. the arresting unit preferably carries the air loads of the foldable wing tip portion during flight. The arresting unit might also be configured to additionally lock the foldable wing tip portion in the folded position.

As a next step, the foldable wing tip portion is locked in the extended position by the arresting unit.

Subsequently, the actuation unit is controlled, i.e. commanded or activated, to move the foldable wing tip portion in the direction towards the folded position, such that the foldable wing tip portion urges, i.e. presses or pulls, against the arresting unit with a predefined test load. This means, the predefined test load is applied at the arresting unit between the foldable wing tip portion and the fixed wing by the actuation unit trying to move the foldable wing tip portion out of the extended position towards the folded position.

During or after application of the test load deformation of the arresting unit, including fracture of the arresting unit, is detected.

Afterwards, the detected deformation is compared to a predefined threshold deformation. The predefined threshold deformation preferably corresponds to a maximum allowable deformation, including no deformation at all.

In such a way, a simple and fast method for predictive maintenance of the arresting unit is provided. This allows the method to be carried out e.g. by a pilot during routine checks on the taxiway before the aircraft is taking off or after landing on the way to the gate. Alternatively, the method can be carried out during maintenance of the aircraft.

According to a preferred embodiment, deformation of the arresting unit is detected by detecting displacement or movement of the foldable wing tip portion relative to the fixed wing during application of the test load. Alternatively, deformation of the arresting unit can also be detected by detecting displacement or movement of the arresting unit or of the actuation unit during application of the test load. By detecting movement or displacement during application of the test load, a very simple and quick test method is provided that can be carried out by a pilot before take off.

Additionally or alternatively, it is preferred that deformation of the arresting unit is detected by inspecting the structure of the arresting unit after application of the test load, for example during maintenance of the aircraft. Inspecting the structure might include measuring dimensions, microscopic crack analyses, etc.. Inspection of the structure of the arresting unit after application of the test load might provide a very precise test result.

According to a preferred embodiment, the test load corresponds to an estimated maximum load occurring at the arresting unit during flight of the aircraft. In such a way, a reliable test is performed. However, a strong actuator is required.

According to another preferred embodiment, the test load corresponds to a maximum load of the actuating unit, i.e. a maximum load the actuating unit is capable to apply. Applying the maximum load of the actuator is very simple to carry out and usually comes closest to the estimated maximum load occurring at the arresting unit during flight of the aircraft.

According to yet another preferred embodiment, the arresting unit comprises a latching device. The latching device comprises a first latching part mounted to the fixed wing and a second latching part mounted to the foldable wing tip portion. One of the first and second latching parts might e.g. comprise a bolt while the other one of the first and second latching parts might comprise a corresponding hole or recess adapted for engagement with the bolt. First and second latching parts can be moved relative to one another between a latched position, where the foldable wing tip portion is locked in the extended position, and an unlatched position, where the foldable wing tip portion is movable out of the extended position. The test load is applied between the first and second latching parts, i.e. first and second latching parts urge against one another with the test load. Preferably, the arresting unit further comprises a locking device for securing the latching parts in the latched position. This represents a simple and reliable construction of the arresting unit.

In particular, it is preferred that the arresting unit comprises a plurality of latching device. Each latching device might be formed as described above, specifically including first and second latching parts. Preferably, also a plurality of locking device are provided. More than one latching device provide additional safety.

In particular, it is preferred that the latching devices are controlled and movable independently from one another between the latched position and the unlatched position. In such a way the latching devices can be tested individually.

It is preferred that all latching devices are in the latched position when the arresting unit is loaded with the test load. In such a way, all latching devices are tested at the same time.

Alternatively, it is preferred that only a subset of latching devices is in the latched position when the arresting unit is loaded with the test load, while the remaining latching devices are in the unlatched position. This means, the total test load applied to the arresting unit is split into a smaller number of latching devices as if all latching devices would be in the latched position, such that the test load share applied at each latching device of the subset of latching devices is higher as if all latching devices would be in the latched position. In such a way, each latching device of the subset of latching devices can be loaded with a test load share that corresponds to the respective share of the estimated maxim load occurring at the arresting unit during flight of the aircraft, even when a total test load is applied that is smaller than the estimated maxim load occurring at the arresting unit during flight of the aircraft. As a result, the estimated maxim load occurring at the arresting unit during flight of the aircraft can be simulated at the latching devices, even when the actuation unit is not strong enough to apply a test load that corresponds to the estimated maxim load occurring at the arresting unit during flight of the aircraft.

A further aspect of the present invention relates to an aircraft comprising a fuselage, wings mounted to the fuselage, and a control unit. Each wing is formed as described above in connection with the method, comprising a fixed wing, a foldable wing tip portion, an actuation unit, and an arresting unit. The fixed wing extends between a root end and a tip end. The foldable wing tip portion is mounted to the tip end of the fixed wing pivotally about an axis of rotation between an extended position and a folded position. In the extended position, the foldable wing tip portion extends in a wing span direction as an extension of the fixed wing, wherein in the folded position the foldable wing tip portion is folded away and extends under an angle with respect to the wing span direction. The axis of rotation extends either in a wing chord direction or in a wing thickness direction. The actuation unit is configured for actuating movement of the foldable wing tip portion between the extended position and the folded position. The arresting unit is configured for locking the foldable wing tip portion in the extended position. The control unit is configured for controlling the aircraft to carry out the method according to any of the afore-described embodiments. In particular, the control unit is configured for controlling the arresting unit to lock the foldable wing tip portion in the extended position, controlling the actuation unit to move the foldable wing tip portion in the direction towards the folded position, such that the foldable wing tip portion urges against the arresting unit with a predefined test load, detecting deformation of the arresting unit during or after application of the test load, and comparing the detected deformation to a predefined threshold deformation, i.e. a maximum allowable deformation, including e.g. no deformation at all. The features and effects explained above in connection with the method apply vis-à-vis for the aircraft.

According to a preferred embodiment, the control unit comprises or is connected to a sensor configured for detecting deformation of the arresting unit by detecting displacement or movement of the foldable wing tip portion relative to the fixed wing during application of the test load. This means, the sensor might be formed as a displacement sensor or as a movement sensor. Alternatively, the sensor might be configured for detecting deformation of the arresting unit by detecting displacement or movement of the arresting unit or of the actuation unit during application of the test load.

According to a further preferred embodiment, the arresting unit comprises a latching device, wherein the latching device comprises a first latching part mounted to the fixed wing and a second latching part mounted to the foldable wing tip portion. One of the first and second latching parts might e.g. comprise a bolt while the other one of the first and second latching parts might comprise a corresponding hole or recess adapted for engagement with the bolt. First and second latching parts can be moved relative to one another between a latched position, where the foldable wing tip portion is locked in the extended position, and an unlatched position, where the foldable wing tip portion is movable out of the extended position. The test load is applied between the first and second latching parts, so that first and second latching parts urge against one another with the test load.

In particular, it is preferred that the arresting unit comprises a plurality of latching devices, wherein each latching device is formed as described above with first and second latching parts. It is further preferred that the latching devices are movable and controllable independently from one another between the latched position and the unlatched position.

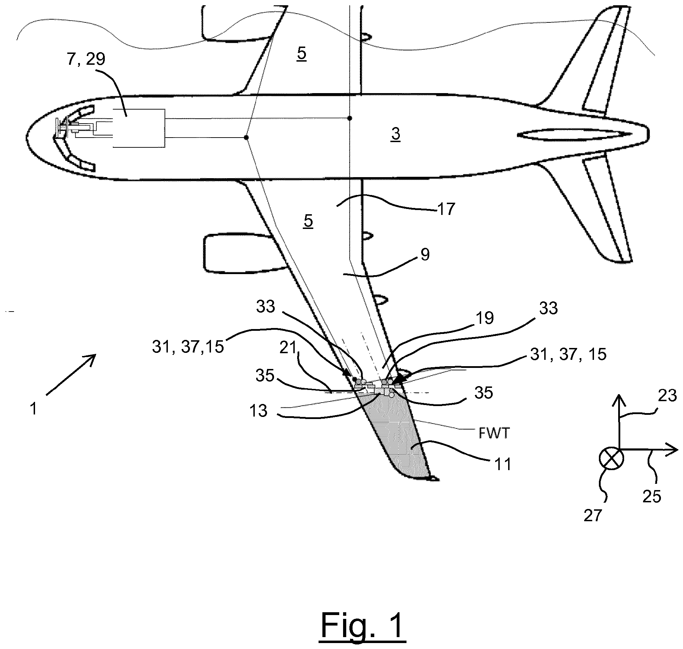

Hereinafter, a preferred embodiment of the present invention is described by means of a drawing. The drawing shows in
- Fig. 1: a top view of an aircraft according to the invention.

In Fig. 1, an aircraft 1 according to an embodiment of the invention is illustrated. The aircraft 1 comprises a fuselage 3, wings 5 mounted to the fuselage 3, and a control unit 7.

Each wing 5 comprises a fixed wing 9, a foldable wing tip portion 11, an actuation unit 13, and an arresting unit 15. The fixed wing 9 extends between a root end 17 and a tip end 19. The foldable wing tip portion 11 is mounted to the tip end 19 of the fixed wing 9 pivotally about an axis of rotation 21 between an extended position and a folded position. In the extended position, the foldable wing tip portion 11 extends in a wing span direction 23 as an extension of the fixed wing 9, wherein in the folded position the foldable wing tip portion 11 is folded away and extends under an angle with respect to the wing span direction 23. The axis of rotation 21 extends in a wing chord direction 25, but in other embodiments might also extend in a wing thickness direction 27.

The actuation unit 13 is configured for actuating movement of the foldable wing tip portion 11 between the extended position and the folded position. The arresting unit 15 is configured for locking the foldable wing tip portion 11 in the extended position. The control unit 7 is configured for controlling the aircraft 1 to carry out the following method for testing operation of the arresting unit 15:
First, the foldable wing tip portion 11 is locked in the extended position by the arresting unit 15. Subsequently, the actuation unit 13 is controlled to move the foldable wing tip portion 11 in the direction towards the folded position, such that the foldable wing tip portion 11 urges against the arresting unit 15 with a predefined test load. During application of the test load deformation of the arresting unit 15 is detected. Deformation of the arresting unit 15 is detected by a sensor 29 detecting displacement or movement of the foldable wing tip portion 11 relative to the fixed wing 9 during application of the test load. Afterwards, the detected deformation is compared to a predefined threshold deformation. The predefined threshold deformation corresponds to a maximum allowable deformation of the arresting unit 15.

The arresting unit 15 comprises a plurality of latching devices 31. Each latching device 31 comprises a first latching part 33 mounted to the fixed wing 9 and a second latching part 35 mounted to the foldable wing tip portion 11. First and second latching parts 33, 35 can be moved relative to one another between a latched position, where the foldable wing tip portion 11 is locked in the extended position, and an unlatched position, where the foldable wing tip portion 11 is movable out of the extended position. In the present embodiment, the first latching part 33 comprises a bolt and the second latching part 35 comprises a corresponding hole adapted for engagement with the bolt. The test load is applied between the first and second latching parts 33, 35. The arresting unit 15 further comprises a plurality of locking devices 37 for securing first and second latching parts 33, 35 in the latched position.

The latching devices 31 are controlled and movable independently from one another between the latched position and the unlatched position. When the arresting unit 15 is loaded with the test load, only a subset of latching devices 31 is in the latched position while the remaining latching devices 31 are in the unlatched position. Each latching device 31 of the subset of latching devices 31 is loaded with a test load share that corresponds to the respective share of an estimated maximum load occurring at the arresting unit 15 during flight of the aircraft 1. In such a way, the estimated maximum load occurring at the arresting unit 15 during flight of the aircraft 1 can be simulated at the latching devices 31, even with an actuation unit 13 that is not strong enough to apply a test load that corresponds to the estimated maximum load occurring at the arresting unit 15 during flight of the aircraft 1.

## Claims

1. A method for testing operation of an arresting unit (15) for locking a foldable wing tip portion (11) of a wing (5) for an aircraft (1) in an extended position, the method comprising the following steps:
- Providing a wing (5) for an aircraft (1), the wing (5) comprising a fixed wing (9),
a foldable wing tip portion (11) mounted to the fixed wing (9) pivotally about an axis of rotation (21) between an extended position and a folded position,
an actuation unit (13) for actuating movement of the foldable wing tip portion (11) between the extended position and the folded position, and
an arresting unit (15) for locking the foldable wing tip portion (11) in the extended position,
- Locking the foldable wing tip portion (11) in the extended position by the arresting unit (15),
- Controlling the actuation unit (13) to move the foldable wing tip portion (11) in the direction towards the folded position, such that the foldable wing tip portion (11) urges against the arresting unit (15) with a predefined test load,
**characterized in that**
the method comprises the further steps:
- Detecting deformation of the arresting unit (15) during or after application of the test load, and
- Comparing the detected deformation to a predefined threshold deformation.

2. The method according to claim 1, wherein deformation of the arresting unit (15) is detected by detecting displacement or movement of the foldable wing tip portion (11) during application of the test load.

3. The method according to claim 1 or 2, wherein deformation of the arresting unit (15) is detected by inspecting the structure of the arresting unit (15) after application of the test load.

4. The method according to any of claims 1 to 3, wherein the test load corresponds to an estimated maximum load occurring at the arresting unit (15) during flight of the aircraft (1).

5. The method according to any of claims 1 to 4, wherein the test load corresponds to a maximum load of the actuating unit (13).

6. The method according to any of claims 1 to 5, wherein the arresting unit (15) comprises a latching device (31),
wherein the latching device (31) comprises a first latching part (33) mounted to the fixed wing (9) and a second latching part (35) mounted to the foldable wing tip portion (11),
wherein first and second latching parts (33, 35) can be moved relative to one another between a latched position, where the foldable wing tip portion (11) is locked in the extended position, and an unlatched position, where the foldable wing tip portion (11) is movable out of the extended position, and
wherein the test load is applied between the first and second latching parts (33,35).

7. The method according to claim 6, wherein the arresting unit (15) comprises a plurality of latching devices (31).

8. The method according to claim 7, wherein the latching devices (31) are movable independently from one another between the latched position and the unlatched position.

9. The method according to claim 7 or 8, wherein all latching devices (31) are in the latched position when the arresting unit (15) is loaded with the test load.

10. The method according to claim 8, wherein only a subset of latching devices (31) is in the latched position when the arresting unit (15) is loaded with the test load, while the remaining latching devices (31) are in the unlatched position.

11. An aircraft (1) comprising
a fuselage (3),
wings (5) mounted to the fuselage (3), and
a control unit (7),
wherein each wing (5) comprises a fixed wing (9), a foldable wing tip portion (11), an actuation unit (13), and an arresting unit (15),
wherein the foldable wing tip portion (11) is mounted to the fixed wing (9) pivotally about an axis of rotation (21) between an extended position and a folded position,
wherein the actuation unit (13) is configured for actuating movement of the foldable wing tip portion (11) between the extended position and the folded position,
wherein the arresting unit (15) is configured for locking the foldable wing tip portion (11) in the extended position, and
wherein the control unit (7) is configured for
- controlling the arresting unit (15) to lock the foldable wing tip portion (11) in the extended position,
- controlling the actuation unit (13) to move the foldable wing tip portion (11) in the direction towards the folded position, such that the foldable wing tip portion (11) urges against the arresting unit (15) with a predefined test load,
**characterized in that**
the control unit (7) is further configured for
- detecting deformation of the arresting unit (15) during or after application of the test load, and
- comparing the detected deformation to a predefined threshold deformation.

12. The aircraft according to claim 11, wherein the control unit (7) comprises a sensor (29) configured for detecting deformation of the arresting unit (15) by detecting displacement or movement of the foldable wing tip portion (11) during application of the test load.

13. The aircraft according to claim 11 or 12, wherein the arresting unit (15) comprises a latching device (31),
wherein the latching device (31) comprises a first latching part (33) mounted to the fixed wing (9) and a second latching part (35) mounted to the foldable wing tip portion (11),
wherein first and second latching parts (33, 35) can be moved relative to one another between a latched position, where the foldable wing tip portion (11) is locked in the extended position, and an unlatched position, where the foldable wing tip portion (11) is movable out of the extended position, and
wherein the test load is applied between the first and second latching parts (33,35).

14. The aircraft according to claim 13, wherein the arresting unit (15) comprises a plurality of latching devices (31).

15. The aircraft according to claim 14, wherein the latching devices (31) are movable independently from one another between the latched position and the unlatched position.

## Patentansprüche

1. Verfahren zum Testen des Betriebs einer Arretierungseinheit (15) zum Verriegeln eines umklappbaren Tragflächenspitzenabschnitts (11) einer Tragfläche (5) für ein Flugzeug (1) in einer ausgeklappten Position, wobei das Verfahren die folgenden Schritte umfasst:
- Vorsehen einer Tragfläche (5) für ein Flugzeug (1), wobei die Tragfläche (5) Folgendes umfasst:
eine feste Tragfläche (9),
einen umklappbaren Tragflächenspitzenabschnitt (11), der verschwenkbar um eine Drehachse (21) zwischen einer ausgeklappten Position und einer eingeklappten Position an der festen Tragfläche (9) montiert ist,
eine Betätigungseinheit (13) zum Betätigen der Bewegung des umklappbaren Tragflächenspitzenabschnitts (11) zwischen der ausgeklappten Position und der eingeklappten Position, und
eine Arretierungseinheit (15) zum Verriegeln des umklappbaren Tragflächenspitzenabschnitts (11) in der ausgeklappten Position,
- Verriegeln des umklappbaren Tragflächenspitzenabschnitts (11) in der ausgeklappten Position durch die Arretierungseinheit (15),
- Steuern der Betätigungseinheit (13), den umklappbaren Tragflächenspitzenabschnitt (11) zur umgeklappten Position zu bewegen, sodass der umklappbare Tragflächenspitzenabschnitt (11) mit einer festgelegten Prüflast gegen die Arretierungseinheit (15) drückt,
**dadurch gekennzeichnet, dass**
das Verfahren ferner die folgenden Schritte umfasst:
- Erfassen der Verformung der Arretierungseinheit (15) beim Aufbringen der Prüflast oder danach und
- Vergleichen der erfassten Verformung mit einem festgelegten Verformungsschwellenwert.

2. Verfahren nach Anspruch 1, wobei die Verformung der Arretierungseinheit (15) durch das Erfassen der Verschiebung oder Bewegung des umklappbaren Tragflächenspitzenabschnitts (11) während des Aufbringens der Prüflast erfasst wird.

3. Verfahren nach Anspruch 1 oder 2, wobei die Verformung der Arretierungseinheit (15) durch das Untersuchen der Struktur der Arretierungseinheit (15) nach dem Aufbringen der Prüflast erfasst wird.

4. Verfahren nach einem der Ansprüche 1 bis 3, wobei die Prüflast einer geschätzten Maximallast entspricht, die während des Flugs des Flugzeugs (1) an der Arretierungseinheit (15) auftritt.

5. Verfahren nach einem der Ansprüche 1 bis 4, wobei die Prüflast einer Maximallast der Betätigungseinheit (13) entspricht.

6. Verfahren nach einem der Ansprüche 1 bis 5, wobei die Arretierungseinheit (15) eine Verriegelungsvorrichtung (31) umfasst,
wobei die Verriegelungsvorrichtung (31) einen ersten Verriegelungsteil (33), der an der festen Tragfläche (9) montiert ist, und einen zweiten Verriegelungsteil (35), der an dem umklappbaren Tragflächenspitzenabschnitt (11) montiert ist, umfasst,
wobei der erste und zweite Verriegelungsteil (33, 35) in Bezug zueinander zwischen einer Verriegelungsposition, in der der umklappbare Tragflächenspitzenabschnitt (11) in der ausgeklappten Position verriegelt ist, und einer Entriegelungsposition, in der der umklappbare Tragflächenspitzenabschnitt (11) aus der ausgeklappten Position heraus beweglich ist, bewegt werden können, und
wobei die Prüflast zwischen dem ersten und zweiten Verriegelungsteil (33, 35) aufgebracht wird.

7. Verfahren nach Anspruch 6, wobei die Arretierungseinheit (15) mehrere Verriegelungsvorrichtungen (31) umfasst.

8. Verfahren nach Anspruch 7, wobei die Verriegelungsvorrichtungen (31) zwischen der Verriegelungsposition und der Entriegelungsposition unabhängig voneinander beweglich sind.

9. Verfahren nach Anspruch 7 oder 8, wobei sich alle Verriegelungsvorrichtungen (31) in der Verriegelungsposition befinden, wenn die Arretierungseinheit (15) mit der Prüflast belastet wird.

10. Verfahren nach Anspruch 8, wobei sich nur ein Teil der Verriegelungsvorrichtungen (31) in der Verriegelungsposition befindet, wenn die Arretierungseinheit (15) mit der Prüflast belastet wird, während sich die restlichen Verriegelungsvorrichtungen (31) in der Entriegelungsposition befinden.

11. Flugzeug (1), Folgendes umfassend:
einen Rumpf (3),
an den Rumpf (3) montierte Tragflächen (5) und
eine Steuereinheit (7),
wobei jede Tragfläche (5) eine feste Tragfläche (9),
einen umklappbaren Tragflächenspitzenabschnitt (11),
eine Betätigungseinheit (13) und eine Arretierungseinheit (15) umfasst,
wobei der umklappbare Tragflächenspitzenabschnitt (11) zwischen einer ausgeklappten Position und einer eingeklappten Position verschwenkbar um eine Drehachse (21) an der festen Tragfläche (9) montiert ist,
wobei die Betätigungseinheit (13) dazu ausgelegt ist, die Bewegung des umklappbaren Tragflächenspitzenabschnitts (11) zwischen der ausgeklappten Position und der eingeklappten Position auszulösen,
wobei die Arretierungseinheit (15) dazu ausgelegt ist, den umklappbaren Tragflächenspitzenabschnitt (11) in der ausgeklappten Position zu verriegeln, und
wobei die Steuereinheit (7) für Folgendes ausgelegt ist:
- Steuern der Arretierungseinheit (15), den umklappbaren Tragflächenspitzenabschnitt (11) in der ausgeklappten Position zu verriegeln,
- Steuern der Betätigungseinheit (13), den umklappbaren Tragflächenspitzenabschnitt (11) zur gefalteten Position zu bewegen, sodass der umklappbare Tragflächenspitzenabschnitt (11) mit einer festgelegten Prüflast gegen die Arretierungseinheit (15) drückt,
**dadurch gekennzeichnet, dass**
die Steuereinheit (7) ferner für Folgendes ausgelegt ist:
- Erfassen der Verformung der Arretierungseinheit (15) beim Aufbringen der Prüflast oder danach und
- Vergleichen der erfassten Verformung mit einem festgelegten Verformungsschwellenwert.

12. Flugzeug nach Anspruch 11, wobei die Steuereinheit (7) einen Sensor (29) umfasst, der dazu ausgelegt ist, Verformungen der Arretierungseinheit (15) zu erfassen, indem er eine Verschiebung oder Bewegung des umklappbaren Tragflächenspitzenabschnitts (11) beim Aufbringen der Prüflast erfasst.

13. Flugzeug nach Anspruch 11 oder 12, wobei die Arretierungseinheit (15) eine Verriegelungsvorrichtung (31) umfasst,
wobei die Verriegelungsvorrichtung (31) einen ersten Verriegelungsteil (33), der an der festen Tragfläche (9) montiert ist, und einen zweiten Verriegelungsteil (35), der an dem umklappbaren Tragflächenspitzenabschnitt (11) montiert ist, umfasst,
wobei der erste und zweite Verriegelungsteil (33, 35) in Bezug zueinander zwischen einer Verriegelungsposition, in der der umklappbare Tragflächenspitzenabschnitt (11) in der ausgeklappten Position verriegelt ist, und einer Entriegelungsposition, in der der umklappbare Tragflächenspitzenabschnitt (11) aus der ausgeklappten Position heraus beweglich ist, bewegt werden können, und
wobei die Prüflast zwischen dem ersten und zweiten Verriegelungsteil (33, 35) aufgebracht wird.

14. Flugzeug nach Anspruch 13, wobei die Arretierungseinheit (15) mehrere Verriegelungsvorrichtungen (31) umfasst.

15. Flugzeug nach Anspruch 14, wobei die Verriegelungsvorrichtungen (31) zwischen der Verriegelungsposition und der Entriegelungsposition unabhängig voneinander beweglich sind.

## Revendications

1. Procédé de test du fonctionnement d'une unité d'arrêt (15) pour verrouiller une partie bout d'aile repliable (11) d'une aile (5) pour un aéronef (1) dans une position étendue, le procédé comprenant les étapes suivantes consistant à :
fournir une aile (5) pour un aéronef (1), l'aile (5) comprenant :
une aile fixe (9),
une partie bout d'aile repliable (11) montée pivotante sur l'aile fixe (9) autour d'un axe de rotation (21) entre une position étendue et une position repliée,
une unité d'actionnement (13) pour actionner le mouvement de la partie bout d'aile repliable (11) entre la position étendue et la position repliée, et
une unité d'arrêt (15) pour verrouiller la partie bout d'aile repliable (11) dans la position étendue,
verrouiller la partie bout d'aile repliable (11) dans la position étendue au moyen de l'unité d'arrêt (15) ; commander l'unité d'actionnement (13) pour mouvoir la partie bout d'aile repliable (11) dans la direction vers la position repliée, de sorte que la partie bout d'aile repliable (11) soit poussée contre l'unité d'arrêt (15) avec une charge de test prédéfinie, le procédé étant **caractérisé en ce que** :
le procédé comprend les autres étapes consistant à :
détecter une déformation de l'unité d'arrêt (15) pendant ou après l'application de la charge de test ; et
comparer la déformation détectée à une déformation-seuil prédéfinie.

2. Procédé selon la revendication 1, dans lequel la déformation de l'unité d'arrêt (15) est détectée en détectant un déplacement ou un mouvement de la partie bout d'aile repliable (11) pendant l'application de la charge de test.

3. Procédé selon la revendication 1 ou 2, dans lequel la déformation de l'unité d'arrêt (15) est détectée en inspectant la structure de l'unité d'arrêt (15) après l'application de la charge de test.

4. Procédé selon l'une quelconque des revendications 1 à 3, dans lequel la charge de test correspond à une charge maximale estimée survenant au niveau de l'unité d'arrêt (15) pendant un vol de l'aéronef (1).

5. Procédé selon l'une quelconque des revendications 1 à 4, dans lequel la charge de test correspond à une charge maximale de l'unité d'actionnement (13).

6. Procédé selon l'une quelconque des revendications 1 à 5, dans lequel l'unité d'arrêt (15) comprend un dispositif de verrouillage (31),
le dispositif de verrouillage (31) comprenant une première partie de verrouillage (33) montée sur l'aile fixe (9) et une seconde partie de verrouillage (35) montée sur la partie bout d'aile repliable (11),
les première et seconde parties de verrouillage (33, 35) pouvant être mues l'une par rapport à l'autre entre une position verrouillée, dans laquelle la partie bout d'aile repliable (11) est verrouillée dans la position étendue, et une position déverrouillée, dans laquelle la partie bout d'aile repliable (11) est mobile hors de la position étendue, et
la charge de test étant appliquée entre les première et seconde parties de verrouillage (33, 35).

7. Procédé selon la revendication 6, dans lequel l'unité d'arrêt (15) comprend une pluralité de dispositifs de verrouillage (31).

8. Procédé selon la revendication 7, dans lequel les dispositifs de verrouillage (31) sont mobiles indépendamment les uns des autres entre la position verrouillée et la position déverrouillée.

9. Procédé selon la revendication 7 ou 8, dans lequel tous les dispositifs de verrouillage (31) sont dans la position verrouillée quand l'unité d'arrêt (15) est chargée avec la charge de test.

10. Procédé selon la revendication 8, dans lequel seul un sous-ensemble de dispositifs de verrouillage (31) est dans la position verrouillée quand l'unité d'arrêt (15) est chargée avec la charge de test, tandis que les dispositifs de verrouillage (31) restants sont dans la position déverrouillée.

11. Aéronef (1) comprenant :
un fuselage (3),
des ailes (5) montées sur le fuselage (3), et
une unité de commande (7),
chaque aile (5) comprenant une aile fixe (9), une partie bout d'aile repliable (11), une unité d'actionnement (13) et une unité d'arrêt (15),
la partie bout d'aile repliable (11) étant montée pivotante sur l'aile fixe (9) autour d'un axe de rotation (21) entre une position étendue et une position repliée,
l'unité d'actionnement (13) étant configurée pour actionner le mouvement de la partie bout d'aile repliable (11) entre la position étendue et la position repliée,
l'unité d'arrêt (15) étant configurée pour verrouiller la partie bout d'aile repliable (11) dans la position étendue, et
l'unité de commande (7) étant configurée pour :
commander l'unité d'arrêt (15) pour verrouiller la partie bout d'aile repliable (11) dans la position étendue ;
commander l'unité d'actionnement (13) pour mouvoir la partie bout d'aile repliable (11) dans la direction vers la position repliée, de sorte que la partie bout d'aile repliable (11) soit poussée contre l'unité d'arrêt (15) avec une charge de test prédéfinie,
l'aéronef étant **caractérisé en ce que** :
l'unité de commande (7) est en outre configurée pour :
détecter une déformation de l'unité d'arrêt (15) pendant ou après l'application de la charge de test ; et
comparer la déformation détectée à une déformation-seuil prédéfinie.

12. Aéronef selon la revendication 11, dans lequel l'unité de commande (7) comprend un capteur (29) configuré pour détecter une déformation de l'unité d'arrêt (15) en détectant un déplacement ou un mouvement de la partie bout d'aile repliable (11) pendant l'application de la charge de test.

13. Aéronef selon la revendication 11 ou 12, dans lequel l'unité d'arrêt (15) comprend un dispositif de verrouillage (31),
le dispositif de verrouillage (31) comprenant une première partie de verrouillage (33) montée sur l'aile fixe (9) et une seconde partie de verrouillage (35) montée sur la partie bout d'aile repliable (11),
les première et seconde parties de verrouillage (33, 35) pouvant être mues l'une par rapport à l'autre entre une position verrouillée, dans laquelle la partie bout d'aile repliable (11) est verrouillée dans la position étendue, et une position déverrouillée, dans laquelle la partie bout d'aile repliable (11) est mobile hors de la position étendue, et
la charge de test étant appliquée entre les première et seconde parties de verrouillage (33, 35).

14. Aéronef selon la revendication 13, dans lequel l'unité d'arrêt (15) comprend une pluralité de dispositifs de verrouillage (31).

15. Aéronef selon la revendication 14, dans lequel les dispositifs de verrouillage (31) sont mobiles indépendamment les uns des autres entre la position verrouillée et la position déverrouillée.
